# EUROPÄISCHE PATENTSCHRIFT

(11) **EP 3 723 240 B1**
(45) Veröffentlichungstag und Bekanntmachung des Hinweises auf die Patenterteilung: **27.07.2022**
(21) Anmeldenummer: 20164836.7
(22) Anmeldetag: 23.03.2020
(51) Int. Cl.: H02K 1/06

(54) **ELEKTROMOTOR MIT VERRINGERTEM SPALT ZUR OPTIMIERUNG DES MAGNETISCHEN FLUSSES ZWISCHEN ROTOR UND STATOR**
ELECTRIC MOTOR WITH REDUCED GAP FOR OPTIMISING MAGNETIC FLUX BETWEEN ROTOR AND STATOR
MOTEUR ÉLECTRIQUE À ESPACE RÉDUIT PERMETTANT D'OPTIMISER LE DÉBIT MAGNÉTIQUE ENTRE LE ROTOR ET LE STATOR

(30) Priorität: 09.04.2019 DE 102019205098
(43) Veröffentlichungstag der Anmeldung: 14.10.2020
(73) Patentinhaber: VOLKSWAGEN AG, 38440 Wolfsburg (DE)
(72) Erfinder: Bode, Behrend, 31228 Peine (DE); Monzen, Niklas, 31135 Hildesheim (DE); Lüders, Ralf, 31224 Peine (DE); Boseniuk, Florian, 30629 Hannover (DE)

(56) Entgegenhaltungen:
- DE-A1- 4 438 130
- DE-A1-102009 047 454
- DE-A1-102013 104 117

## Beschreibung

Die Erfindung betrifft einen Elektromotor, insbesondere für den Betrieb einer Pumpe, umfassend einen mit mindestens einem Magneten ausgestatteten Rotor und einen Stator.

Die Druckschrift DE 10 2009 047 454 A1 beschreibt einen Elektromotor für den Betrieb einer Pumpe, mit einem zylinderförmigen Trennkörper, der innenseitig über einen Luftspalt beabstandet zu einem Rotor angeordnet und außenseitig mit einem Stator verbunden ist, wobei der Stator von einem Spulenkörper umgebene Polschenkel aufweist, die über einen in radialer Richtung inneren Rand mit dem zylinderförmigen Trennkörper einerseits und über einen in radialer Richtung äußeren Rand mit einem koaxial zu dem zylinderförmigen Trennkörper angeordneten Polring andererseits verbunden sind, wobei der innere Rand der Polschenkel formschlüssig oder stoffschlüssig mit dem zylindrischen Trennkörper verbunden sind. Die Patentanmeldung DE 4438130 A1 offenbart einen Spaltrohrmotor für Pumpen, wobei der Spaltrohr aus einem weichmagnetischen Werkstoff oder Kunststoff ausgebildet ist.

Als Luftspalt wird in der Elektrotechnik im Rahmen magnetischer Kreise der Raum oder Abstand zwischen zwei gegenüberliegenden Flächen eines Rotors und eines Stators bezeichnet, welche einen magnetischen Fluss führen, der insbesondere bei Wasserpumpen "Nassläuferpumpen" mit einem Fluid gefüllt sein kann. Für eine möglichst effiziente Funktion wird danach gestrebt den Spalt möglichst klein zu halten.

Die Polschenkel sind formschlüssig mit einem Spaltrohr verbunden. Der Polschenkel weist den inneren Rand (Polschuh) auf, dessen in axialer Richtung verlaufende Seiten beziehungsweise Seitenflächen jeweils in einer Axialnut benachbarter Rippen eingefasst sind. Die Rippen weisen bezüglich einer Längsmittelebene derselben jeweils eine einzige Axialnut auf, die in axialer Richtung durchgehend oder unterbrochen ausgebildet sein kann. Die Rippen sind in Umfangsrichtung derart angeordnet, dass die Axialnuten benachbarter Rippen auf eine Polbreite der Polschuhe angepasst sind.

Die Polschenkel können auch einstückig mit dem Spaltrohr verbunden sein, wobei die aus einem gestanzten und paketierten Blechmaterial bestehenden Polschenkel in eine Spritzgießform eingelegt und dann von der Kunststoffmasse zur Bildung des Spaltrohres teilweise umspritzt oder angespritzt werden. Die Polschenkel sind somit stoffschlüssig mit dem Spaltrohr verbunden. Hierdurch wird eine zusätzliche axiale Sicherung der Polschenkel gewährleistet.

Die Druckschrift DE 10 2016 201 967 A1 offenbart einen Stator, der ein kreisringscheibenförmiges Statorjoch mit einer inneren Aufnahmeöffnung umfasst, wobei durch die Kreisringscheibenform des Statorjochs eine radiale Richtung und eine Umfangsrichtung definiert sind. Das Statorjoch wird nach radial innen hin durch eine Innenoberfläche begrenzt. Ein Statorstern umfasst eine Mehrzahl sich nach radial Innen hin erstreckender Polzähne für das Aufbringen von Statorwicklungen, wobei jeder einzelne Polzahn in einem montierten Zustand, in dem der Statorstern mit dem Statorjoch verbunden ist, im Bereich eines ersten Endes mit der Innenoberfläche des Statorjochs verbunden ist und im Bereich eines zweiten Endes je einen Polfuß aufweist. Der Polfuß erstreckt sich im Wesentlichen in Umfangsrichtung, wobei die sich in Umfangsrichtung erstreckenden Polfüße zusammen einen Polschuh ausbilden und einen Spalttopf, der sich zylindertopfartig in axialer Richtung erstreckt, umgeben. Die Polfüße bilden zusammen mit dem Spalttopf der elektrischen Maschine ein Verbundbauteil.

Es wird erläutert, dass der Stator in dem Motorgehäuse einer elektrischen Maschine außen um den Spalttopf angeordnet ist, wobei die sich in Umfangsrichtung erstreckenden Polfüße einen Spalttopf, der sich zylindertopfartig in axialer Richtung erstreckt, umgeben. Der Spalttopf bildet zusammen mit den Polfüßen beziehungsweise mit dem von diesem ausgebildeten Polschuh ein Verbundbauteil aus. Dabei ist der Spalttopf mit den Polfüßen durch Umspritzen stoffschlüssig verbunden. Spalttöpfe können generell aus Metall bestehen, wobei grundsätzlich eine metallfreie Ausführung, beispielsweise aus einem Kunststoff, bevorzugt wird.

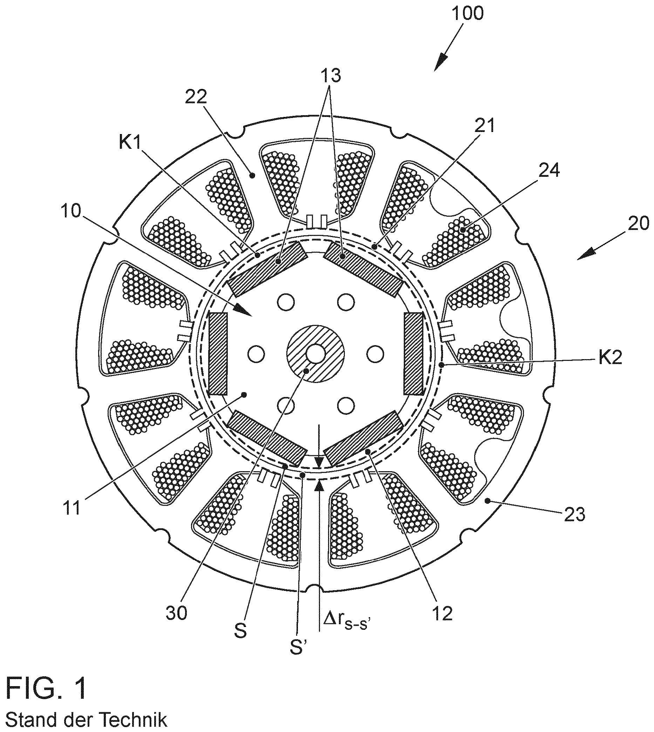

Zur Verdeutlichung wird in Figur 1 noch eine weitere herkömmliche Ausgestaltungsvariante eines Elektromotors für den Betrieb einer Pumpe mit einem zylinderförmigen Trennkörper (Spalttopf) gezeigt, der innenseitig über einen sogenannte Luftspalt (in dem auch Kühlmittel sein kann) beabstandet zu einem magnetischen Rotor mit Magneten angeordnet und außenseitig mit einem Polschenkel umfassende Stator verbunden ist.

Figur 1 zeigt:
Eine Schnittdarstellung eines quer zu seiner in Längserstreckung geschnitten Elektromotors 100 in einer Magneten 13 aufweisenden Ausgestaltungsvariante wobei die Rotorwelle 30 des Elektromotors 100 axial in Längserstreckung (in die Blattebene hinein) verläuft.

Gemäß der Figur 1 weist der Stator 20 von einem Spulenkörper, dessen Wicklung 24 dargestellt ist, umgebene Polschenkel 22 auf, die über einen in radialer Richtung inneren Rand mit dem zylinderförmigen Trennkörper 21 (der auch als Spalttopf oder Polhülse bezeichnet wird) einerseits und über einen in radialer Richtung äußeren Rand mit einem koaxial zu dem zylinderförmigen Trennkörper 21 angeordneten Statorhülse 23 andererseits verbunden sind, wobei der innere Rand der Polschenkel 22 formschlüssig oder stoffschlüssig mit dem zylindrischen Trennkörper 21 verbunden sind. Zur Führung und Verstärkung des durch die bestromten Wicklungen 24 erzeugten magnetischen Feldes ist das Statormaterial üblicherweise metallisch, beispielsweise weichmagnetisches Eisen. Die Wicklung 24 umfasst mehrere Spulen, die aus mehreren Windungen gebildet sind, wobei die Windungen um die Polzähne 22 gewickelt sind. Die verschalteten Spulen ergeben insgesamt die Wicklung 24.

Der zylinderförmige Trennkörper 21 besteht in herkömmliche Weise aus Kunststoff oder es werden nicht-magnetische, schlecht stromleitende Edelstähle verwendet. Bei besonders aggressiven Medien greift der Fachmann zu Keramik oder Glas.

Der Rotor 10 und der Stator 20 sind durch den Luftspalt S, welcher parallel zu einer Mittelachse der den Rotor 10 beziehungsweise das Rotorblech 11 des Rotors 10 antreibenden Welle 30 verläuft, voneinander getrennt.

Der Rotor 10 umfasst ferner eine hülsenförmige, insbesondere zylindrische Rotormanschette 12, deren von der Achse der Welle 30 ausgehend - in radialer Richtung gesehen - äußere Mantelfläche (gemäß der inneren gestrichelten Kreislinie K1 des im Schnitt gezeigten Elektromotors 100) gegenüber der von der Achse der Welle 30 ausgehend - in radialer Richtung gesehen - inneren Mantelfläche des zylindrischen Trennkörpers 21 den Luftspalt S bildet.

Die Magneten 13 liegen mit ihren dem Luftspalt S am nächsten liegenden Stellen auf der (vergleiche Figur 1) inneren gestrichelten Kreislinie K1. Somit wird zwischen der äußeren Mantelfläche der zylindrischen Rotormanschette 12 und der inneren Mantelfläche des zylindrischen Trennkörpers 21 der Luftspalt S gebildet, wobei bis zu einer den Magneten 13 am nächsten liegenden Stelle ein weiterer Materialspalt S' gebildet ist, der zwischen der inneren Mantelfläche des zylindrischen Trennkörpers 21 und der äußeren Mantelfläche (gemäß der äußeren gestrichelten Kreislinie K2 des im Schnitt gezeigten Elektromotors 100) des zylindrischen Trennkörpers 21 ausgebildet ist.

Zwischen den Kreislinien K1, K2 wird somit ein Spaltabstand Δr_{s-s'} gebildet, der hinsichtlich des magnetischen Flusses von Nachteil ist.

Wie bereits oben erläutert, soll der Spaltabstand Δr_{s-s'} für eine möglichst effiziente Funktion möglichst klein gehalten werden, da Luftspalt S und der Materialspalt S' des zylindrischen Trennkörpers 21 der grundsätzlich aus Metall sein kann aber bevorzugt aus Kunststoff besteht, den magnetischen Fluss zwischen der Wicklung 24 des Spulenkörpers und den Magneten 13 behindern.

Die Aufgabe besteht somit darin, einen Elektromotor für den Betrieb einer Pumpe zu schaffen, bei dem ein magnetischer Fluss zwischen der Wicklung des Spulenkörpers und den Magneten im Sinne einer geringen Behinderung des magnetischen Flusses optimiert wird.

Ausgangspunkt der Erfindung ist die Feststellung, dass der Luftspalt S zwischen Stator 20 und Rotor 10 als technisch notwendiger Spalt nicht beseitigt werden kann. Hier wird eine möglichst geringe Spaltbreite vorgesehen.

Insofern rückt zur Lösung der Aufgabe der oben definierte Spalt S' zwischen der inneren Mantelfläche des zylindrischen Trennkörpers 21 und der äußeren Mantelfläche (gemäß der äußeren gestrichelten Kreislinie K2 des in Figur 1 gezeigten Schnitts des Elektromotors 100) des zylindrischen Trennkörpers 21 in den Mittelpunkt.

Dabei wird zur Lösung der Aufgabe erfindungsgemäß die Ausgestaltung des den Spalt bildenden Bauteils und/oder seine Materialbeschaffenheit verändert.

Ausgangspunkt der Erfindung ist ein Elektromotor, insbesondere für den Betrieb einer Pumpe, umfassend einen Rotor und einen Stator, wobei der Stator eine sich in axialer Richtung erstreckende innere Polhülse und eine äußere Statorhülse aufweist, zwischen denen Polschenkel in radialer Richtung angeordnet sind, auf denen eine Wicklung eines Spulenkörpers als verteilte oder konzentrierte Wicklung angeordnet ist, wobei zwischen der äußeren Mantelfläche der inneren Polhülse und der inneren Mantelfläche der inneren Polhülse ein Materialspalt und der inneren Mantelfläche der inneren Polhülse und der äußeren Mantelfläche des Rotors ein Luftspalt ausgebildet sind, sodass zwischen der äußeren Mantelfläche der inneren Polhülse und der äußeren Mantelfläche des Rotors ein Übergangsbereich mit einem radialen Spaltabstand, der sich aus dem Materialspalt und dem Luftspalt zusammensetzt, gebildet wird.

Erfindungsgemäß ist vorgesehen, dass zumindest die innere Polhülse des Stators aus einem hochohmigen weichmagnetischen Verbundwerkstoff ausgebildet ist, wodurch sich der radiale Spaltabstand des Übergangsbereiches in dem ein magnetischer Widerstand gebildet wird, der dem magnetischen Fluss zwischen Spulenkörper und Rotor entgegen wirkt, auf den unvermeidbaren Luftspalt reduziert ist.

Üblicherweise werden Polhülsen mit nicht-ferromagnetisch Eigenschaften eingesetzt, die niederohmig aus Edelstahl (Edelstahlhülse) oder hochohmig aus Kunststoff (Kunststoffhülse) ausgebildet sind.

Die Polhülse bildet zusammen mit dem Luftspalt einen radialen Spaltabstand, welcher einen erhöhten magnetischen Widerstand darstellt und somit einem optimalen magnetischen Fluss zwischen Spulenkörper und Rotor entgegenwirkt. Gemäß der Erfindung ist die innere Polhülse des Stators aus einem hochohmigen weichmagnetischen Verbundwerkstoff ausgebildet, wodurch sich der radiale Spaltabstand, in dem ein magnetischer Widerstand gebildet wird, der dem magnetischen Fluss zwischen Spulenkörper und Rotor entgegenwirkt, auf den unvermeidbaren Luftspalt reduziert.

Diese Ausgestaltungsvariante betrifft insbesondere Elektromotoren, wie Asynchron- und Reluktanzmotore, die ohne Magneten ausgebildet sind.

In der in der Beschreibung erläuterten Ausgestaltungsvariante weist der Elektromotor Magneten auf, die durch eine Rotormanschette gesichert an dem Rotor angeordnet sind. Der Rotor umfasst somit die Magneten und die Rotormanschette, wie in der Beschreibung näher erläutert ist.

Ausgangspunkt der Erfindung ist gemäß dieser Ausgestaltungsvariante ein Elektromotor, der insbesondere für den Betrieb einer Pumpe eingesetzt wird, der einen mit mindestens einem Magneten ausgestatteten Rotor und einen Stator umfasst, wobei der Stator eine sich in axialer Richtung erstreckende innere Polhülse und eine äußere Statorhülse aufweist, zwischen denen Polschenkel in radialer Richtung angeordnet sind, auf denen eine Wicklung eines Spulenkörpers als verteilte oder konzentrierte Wicklung angeordnet ist, wobei zwischen der äußere Mantelfläche der inneren Polhülse und der inneren Mantelfläche der Polhülse ein Materialspalt und der inneren Mantelfläche der inneren Polhülse und dem den mindestens einen Magneten aufweisenden Rotors äußeren Mantelfläche des Rotors ein Luftspalt ausgebildet sind, sodass zwischen der äußeren Mantelfläche der inneren Polhülse und der äußeren Mantelfläche des Rotors ein Übergangsbereich mit einem radialen Spaltabstand, der sich aus dem Luftspalt und dem Materialspalt zusammensetzt, gebildet wird, wobei in dem Übergangsbereich ein magnetischer Widerstand wirkt, der einem optimalen magnetischen Fluss zwischen Spulenkörper und Rotor entgegen wirkt.

Erfindungsgemäß ist bei dieser Ausgestaltungsvariante mit dem mindestens einen Magneten ebenfalls vorgesehen, dass zumindest die innere Polhülse des Stators aus einem hochohmigen weichmagnetischen Verbundwerkstoff ausgebildet ist, wodurch sich der radiale Spaltabstand des Übergangsbereichs, in dem ein magnetischer Widerstand gebildet wird, auf den unvermeidbaren Luftspalt reduziert.

Die nachfolgenden Ausführungsformen gelten für die zuvor beschriebenen Ausgestaltungsvarianten des Elektromotors (ohne oder mit Magneten) gleichermaßen.

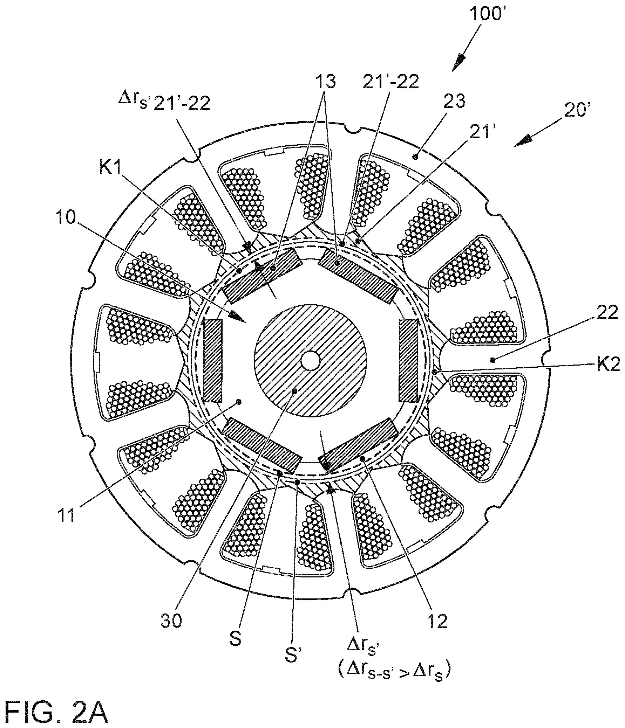

In bevorzugter Ausgestaltung ist in einer ersten Ausführungsform der Erfindung vorgesehen, dass die innere Polhülse aus dem hochohmigen weichmagnetischen Verbundwerkstoff ausgebildet ist, während der Polschenkel und die äußere Statorhülse aus einem Stahlwerkstoff ausgebildet sind (vergleiche Figur 2A und zugehörige Beschreibung).

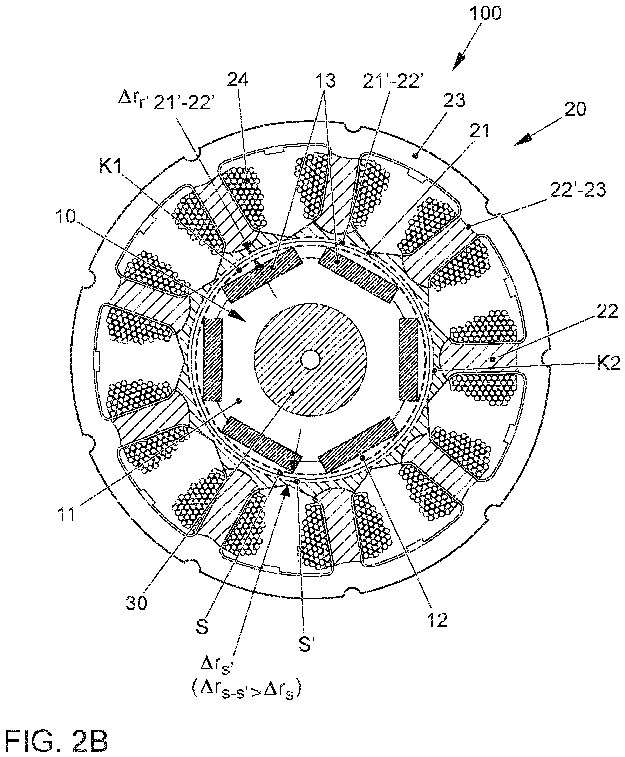

In einer zweiten Ausführungsform ist bevorzugt vorgesehen, dass die innere Polhülse und die Polschenkel aus dem hochohmigen weichmagnetischen Verbundwerkstoff ausgebildet sind, während die äußere Statorhülse aus dem Stahlwerkstoff ausgebildet ist (vergleiche Figur 2B und zugehörige Beschreibung).

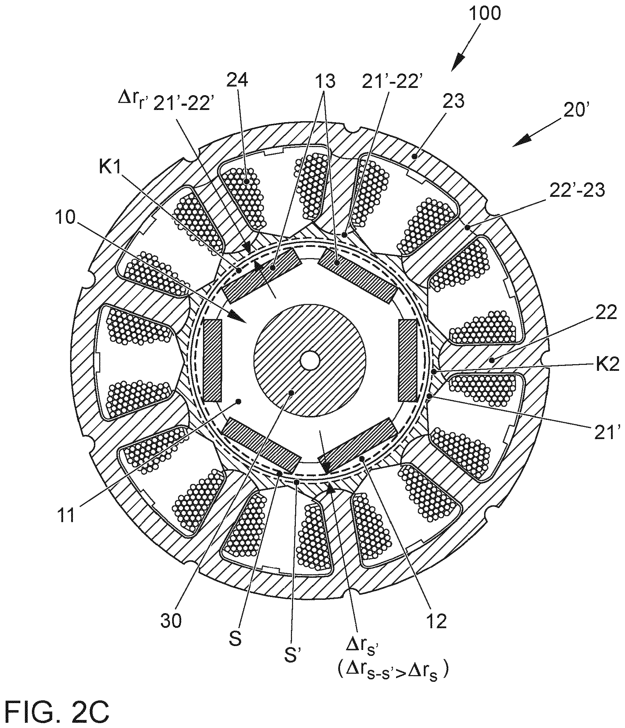

In einer dritten bevorzugten Ausführungsform ist vorgesehen, dass die innere Polhülse und die Polschenkel sowie die äußere Statorhülse aus dem hochohmigen weichmagnetischen Verbundwerkstoff ausgebildet sind (vergleiche Figur 2C und zugehörige Beschreibung).

Der erfindungsgemäße Stator ist zweistückig, wenn die innere Polhülse aus dem hochohmigen weichmagnetischen Verbundwerkstoff ausgebildet ist, während der Polschenkel und die äußere Statorhülse einstückig aus einem Stahlwerkstoff ausgebildet sind.

Der erfindungsgemäße Stator ist mehrstückig, wenn die innere Polhülse aus dem hochohmigen weichmagnetischen Verbundwerkstoff ausgebildet ist, während der Polschenkel und die äußere Statorhülse zweistückig aus einem Stahlwerkstoff ausgebildet sind.

Der erfindungsgemäße Stator ist ebenfalls zweistückig, wenn die innere Polhülse und die Polschenkel einstückig aus dem hochohmigen weichmagnetischen Verbundwerkstoff ausgebildet sind, während die äußere Statorhülse aus einem Stahlwerkstoff ausgebildet ist.

Der erfindungsgemäße Stator ist mehrstückig, wenn die innere Polhülse und die Polschenkel zweistückig aus dem hochohmigen weichmagnetischen Verbundwerkstoff ausgebildet sind, während die äußere Statorhülse aus einem Stahlwerkstoff ausgebildet ist.

Der erfindungsgemäße Stator ist ebenfalls zweistückig, wenn die innere Polhülse und die Polschenkel gemeinsam sowie die äußere Statorhülse jeweils einstückig aus dem hochohmigen weichmagnetischen Verbundwerkstoff ausgebildet sind.

Der erfindungsgemäße Stator ist aber auch zweistückig, wenn die innere Polhülse sowie die Polschenkel und die äußere Statorhülse gemeinsam jeweils einstückig aus dem hochohmigen weichmagnetischen Verbundwerkstoff ausgebildet sind.

Schließlich kann der erfindungsgemäße Stator mehrstückig ausgebildet werden, wobei dann die innere Polhülse, die Polschenkel und die äußere Statorhülse jeweils separat ausgebildet sind.

Der erfindungsgemäße Stator ist in einer besonderen mehrstückigen vierten Ausführungsform derart ausgebildet, dass die innere Polhülse insgesamt ein erstes Stück bildet, während mindestens ein oder mehrere Polschenkel mit in radialer Richtung getrennten Teilstücken der äußeren Statorhülse gemeinsam mehrere Einzelstücke - in der Art von Kreissegmenten - bilden, welche jeweils ein Kreissegment der äußeren Statorhülse und den oder die innenliegenden Polschenkel umfassen. Die Polschenkel werden bei dieser vierten Ausführungsform entsprechend von innen gewickelt. Die vierte Ausführungsform ist in den Figuren nicht näher dargestellt.

Der erfindungsgemäße Stator ist in einer weiteren besonderen zweistückigen fünften Ausführungsform derart ausgebildet, dass die innere Polhülse insgesamt ein erstes Stück bildet, während mindestens ein oder mehrere Polschenkel mit in radialer Richtung scharnierartig beweglichen kreissegmentierten Teilstücken der äußeren Statorhülse gemeinsam ein zweites Stück bilden. Mit anderen Worten, mehrere miteinander in Verbindung stehende Teilstücke der äußeren kreissegmentierten Statorhülse bilden beweglich miteinander verbundene Kreissegmente, welche die innenliegenden Polschenkel umfassen. Die Polschenkel werden bei dieser zweistückigen fünften Ausführungsform ebenfalls entsprechend von innen gewickelt, da die Statorhülse an mindestens einer Stelle in radialer Richtung getrennt ist, sodass sich mehrere zusammenhängende Teilstücke - in der Art einer offenen Kette - aus Kreissegmenten und von innen zugänglichen Polschenkeln ergeben, da die Polschenkel innenseitig der beweglichen miteinander verbundenen kreissegmentierten Statorhülse angeordnet sind. Die fünfte Ausführungsform ist in den Figuren nicht näher dargestellt.

Bei diesen beiden besonderen Ausführungsformen, der vierten und fünften Ausführungsform, ist in einer materialseitigen Ausführungsvariante vorgesehen, dass - gemäß der vierten Ausführungsform - die innere Polhülse und die mehreren Einzelstücke der äußeren Statorhülse mit mindestens einem innenliegenden Polschenkel beziehungsweise - gemäß der fünften Ausführungsform - die innere Polhülse und die mehreren beweglich miteinander verbundenen Teilstücke der äußeren Statorhülse mit den innenliegenden Polschenkeln als offene Kette erfindungsgemäß aus einem hochohmigen, weichmagnetischen Verbundwerkstoff [SMC] ausgebildet sind. Mit anderen Worten, der Stator ist bei dieser materialseitigen Ausführungsvariante nach dem Zusammenbau vollständig aus hochohmigen, weichmagnetischen Verbundwerkstoff [SMC] ausgebildet.

Bei diesen beiden besonderen Ausführungsformen, der vierten und fünften Ausführungsform, ist in einer anderen materialseitigen Ausführungsvariante vorgesehen, dass gemäß der vierten Ausführungsform die innere Polhülse aus dem hochohmigen, weichmagnetischen Verbundwerkstoff [SMC] und die mehreren Stücke der äußeren Statorhülse mit mindestens einem innenliegenden Polschenkel aus einem Stahlwerkstoff beziehungsweise gemäß der fünften Ausführungsform die innere Polhülse wiederum aus dem hochohmigen, weichmagnetischen Verbundwerkstoff [SMC] und die mehreren beweglich miteinander verbundenen Teilstücke der äußere Statorhülse mit den innenliegenden Polschenkeln - als offene Kette - erfindungsgemäß aus einem Stahlwerkstoff ausgebildet ist. Mit anderen Worten, bei dieser materialseitigen Ausführungsvariante ist der Stator nach dem Zusammenbau die innere Polhülse betreffend aus hochohmigen, weichmagnetischen Verbundwerkstoff [SMC] ausgebildet, während die weiteren Einzelstücke oder die offene Kette aus dem Stahlwerksoff ausgebildet sind.

Bevorzugt sind die Stücke des jeweiligen zwei oder mehrstückig ausgebildeten Stators form- und/oder stoffschlüssig in den jeweiligen Verbindungsstellen miteinander verbunden.

Vorgesehen ist bevorzugt, dass ein Abstand zumindest zwischen den jeweiligen polhülsenseitigen radialen Enden der Polschenkel und der Innenmantelfläche der inneren Polhülse innerhalb der Verbindungsstellen gering gewählt ist.

Besonders bevorzugt ist, dass die innere Polhülse das Dichtelement zwischen Rotor und dem Spulenkörper des Stators ist.

Die Erfindung sieht insbesondere vor, dass der weichmagnetische Pulververbundwerkstoff ein SMC-[engl.: Soft Magnetic Composite]-Pulververbundwerkstoff ist, der aus einem hochreinem Eisenpulver mit einer speziellen Oberflächenbeschichtung ausgebildet ist, wobei auf jedem einzelnen Eisenpulverpartikel eine elektrisch isolierende Oberfläche ausgebildet ist.

Es wird somit wie zuvor erläutert, zur Lösung der Aufgabe erfindungsgemäß die Ausgestaltung des den Materialspalt bildenden Bauteils und/oder seine Materialbeschaffenheit derart verändert, dass vorteilhafte Effekte hinsichtlich einer optimierten magnetischen Flussführung, wie nachfolgend anhand von drei Ausführungsformen anhand der zugehörigen Zeichnungen beschrieben ist, wobei die Figuren 2A bis 2C jeweils eine Schnittdarstellung eines erfindungsgemäß quer zu seiner in Längserstreckung geschnitten Elektromotors 100'in den verschiedenen Ausführungsformen zeigen, wobei die Rotorwelle 30 des Elektromotors 100' axial in Längserstreckung verläuft des Elektromotors 100' verläuft.

In der Figuren 1 bis 2C werden für gleiche Bauteile gleiche Bezugszeichen verwendet, wobei bei der Figurenbeschreibung nicht stets auf alle Bauteile erneut eingegangen wird. Es zeigen:
- Figur 2A: eine Schnittdarstellung des erfindungsgemäßen Elektromotors in einer ersten Ausführungsform;
- Figur 2B: eine Schnittdarstellung des erfindungsgemäßen Elektromotors in einer zweiten Ausführungsform; und
- Figur 2C: eine Schnittdarstellung des erfindungsgemäßen Elektromotors in einer dritten Ausführungsform.

Die Figur 2A zeigt eine Schnittdarstellung des erfindungsgemäßen Elektromotors 100' in der ersten Ausführungsform.

Gemäß dieser ersten Ausführungsform sind der Rotor 10 und der Stator 20 und die sich in axialer Richtung erstreckende innere Polhülse und die äußere Statorhülse 23 zylindrisch ausgebildet.

Durch den Vergleich der Figuren 1 und 2A wird deutlich, dass die als zylindrischer Trennkörper ausgebildete erfindungsgemäße innere zylindrische Polhülse 21' als Teil des zylindrischen Stators 20' ausgebildet wird.

Die herkömmliche innere Polhülse 21 wurde bisher wie erläutert aus Kunststoff ausgebildet oder es werden nicht-magnetische, schlecht stromleitende Edelstähle verwendet. Bei besonders aggressiven Medien greift der Fachmann zu Keramik oder Glas.

Erfindungsgemäß ist vorgesehen, dass erfindungsgemäß zumindest die innere zylindrische Polhülse 21 aus einem hochohmigen weichmagnetischen Verbundwerkstoff, insbesondere einem weichmagnetischen Pulververbundwerkstoff "SMC" [engl.: Soft Magnetic Composite] ausgebildet wird.

Der hochohmige weichmagnetische Verbundwerkstoff SMC weist eine hohe Permeabilität in Verbindung mit hohem elektrischen Widerstand auf. Der hochohmige weichmagnetische Verbundwerkstoff SMC besteht aus hoch reinem Eisenpulver mit einer speziellen Oberflächenbeschichtung auf jedem einzelnen Partikel. Diese elektrisch isolierende Oberfläche gewährleistet einen hohen elektrischen Widerstand, der auch nach dem Pressen und der Wärmebehandlung vorliegt, wodurch Wirbelstromverluste in vorteilhafter Weise praktisch unbedeutend sind. SMC-Pulververbundwerkstoff ist besonders gut geeignet für Anwendungen, bei denen es auf niedrige Verluste ankommt, insbesondere bei hohen Frequenzen, weil die Vorteile des SMC- Pulververbundwerkstoffs mit der Magnetfrequenz steigen.

Dabei ist erfindungsgemäß vorgesehen, dass die innere Polhülse 21' als Kompaktbauteil ausgebildet oder als Schichtbauteil in Schichten aus einem SMC-Material (vergleiche die Schraffur in Figur 2A zur Verdeutlichung der Verwendung des SMC-Materials) ausgebildet wird.

Wesentlich ist, dass im Gegensatz zu weichmagnetischen Elektroblechen der genannte weichmagnetische Pulververbundwerkstoff SMC eingesetzt wird, wodurch die magnetische Flussführung innerhalb der innere Polhülse 21' derart optimiert wird, dass schließlich in vorteilhafter Weise nur der Luftspalt S mit dem in Figur 2A gezeigten Abstand Δrₛ negativ auf die Flussführung und somit negativ auf den Wirkungsgrad des Elektromotors 100' einwirkt.

Mit anderen Worten, es wird ein zylindrischer Stator 20' ausgebildet, bei dem zumindest die erfindungsgemäße SMC-Polhülse 21' als Teilkomponente des zylindrischen Stators 20' einen aus einem weichmagnetischen aus hochreinen Eisenpulver, wobei jedes Korn eine elektrisch isolierte Oberfläche aufweist, einen Teilbereich des Stators 20' bildet, sodass die SMC-Polhülse 21' gegenüber dem bisherigen Material der Polhülse beziehungsweise des bisherigen Spalttopfes 21 (vergleiche Figur 1) optimierte, das heißt sehr gute Fähigkeiten zur dreidimensionalen Flussführung, und insbesondere bei hohen Frequenzen niedrigere Wirbelstromverluste aufweist. Hinzu kommt, dass die geometrische Form der SMC-Polhülse 21' bei der Herstellung der SMC-Polhülse 21' variabel bestimmt werden kann und die SMC-Polhülse 21' eine für die Anwendung ausreichende Festigkeit aufweist.

Bei dieser ersten Ausführungsform übernimmt somit die SMC-Polhülse 21' des Stators 20' des Elektromotors 100' übernimmt die SMC-Polhülse 21' neben der Führung des Magnetfelds auch die Abdichtung des elektrischen Teils 24 des Stators 20' vor einem Medium, insbesondere einem Kühlmittel. Insbesondere bei einem Elektromotor 100' für eine elektrische Wasserpumpe, bei dem beide Bauteile Stator 20' und Rotor 10 vor eindringenden Flüssigkeiten (Kühlmittel bei Nassläuferpumpen) geschützt werden müssen, wirkt die statorseitige SMC-Polhülse 21' als Dichtungselement, wobei gleichzeitig der Abstand Δrₛ zwischen Stator 20' und Rotor 10 sinkt und der Wirkungsgrad des Elektromotors 100' steigt. Zudem wird erreicht, dass durch die Beeinflussung der Führung des Magnetfelds auch andere Wickelschemata zur Herstellung des Spulenkörpers verwendet werden können, wobei insbesondere größere Drahtdurchmesser eingesetzt werden können, wodurch der Herstellungsprozess robuster wird.

Wird der Stator 20' von innen gewickelt (Innenwicklung), stellt die innere SMC-Polhülse 21' ein separates Kompaktbauteil oder Schichtbauteil dar, welches formschlüssig und/oder stoffschlüssig mit den Polschenkeln 22 verbunden wird. Hierbei kann die SMC-Polhülse 21' in den jeweiligen Verbindungstellen 21'-22 an den Enden der Polschenkel 22 anliegen oder in die Polschenkel 22 eingreifen. Dabei ist vorgesehen, dass die SMC-Polhülse 21' im Hinblick auf den Magnetfluss des gebildeten Magnetfeldes optimiert ausgeformt wird, wobei vorgesehen ist, dass der Abstand Δr_{21'-22} (vergleiche Figur 2A) zwischen dem jeweiligen Ende der Polschenkel 22 zwischen der Innenmantelfläche der SMC-Polhülse 21' und dem Ende des Polschenkels 22 nur gering ist.

Hierdurch werden in Kombination die Effekte erreicht, das sehr gute Fähigkeiten zur dreidimensionalen Flussführung mit einer geringen Wandstärke der SMC-Polhülse 21' im Übergangsbereich, insbesondere im Verbindungsbereich zwischen SMC-Polhülse 21' und den Polschenkeln 22 zusammentreffen, wodurch insbesondere bei hohen Frequenzen aber auch bei niedrigen Frequenzen aufgrund der geringen Materialstärke noch geringere Wirbelstromverluste auftreten.

Erfindungsgemäß werden gemäß der ersten Ausführungsform die äußere Statorhülse 23 und die Polschenkel 22, wie in Figur 2A dargestellt, einteilig oder gegebenenfalls zweiteilig aus den herkömmlichen Materialien hergestellt und nach der Wicklung 24 des Spulenkörpers erfolgt der Zusammenbau an den Verbindungstellen 21'-22 durch die formschlüssige und/oder stoffschlüssige Verbindung.

In der dargestellten Ausführungsvariante ist das jeweilige Ende der Polschenkel 22 konvex ausgebildet, während die SMC-Polhülse 21' konkave Aufnahmen bildet, sodass positionsgetreue Verbindungstellen 21'-22 gebildet sind, die insbesondere im Bereich des Spulenkörpers in radialer Richtung der Polschenkel 22 gesehen einen besonders dünnen Materialstärkebereich ausbilden. Durch die konkave Aufnahmen weist die SMC-Polhülse 21' aber insgesamt einen stabilen Aufbau auf, da die Materialstärke außerhalb des Bereichs des Spulenkörpers in radialer Richtung gesehen zunimmt.

Es versteht sich, dass die erläuterte Ausführungsvariante der geometrischen Ausgestaltung eine bevorzugte Ausführungsvariante ist, wobei der Übergang zwischen der SMC-Polhülse 21' und den Polschenkel 22 auch anders ausgeführt werden kann.

Durch den Materialübergang in den Verbindungstellen 21'-22 zwischen SMC-Polhülse 21' und materialseitig gesehen herkömmlichen Polschenkeln 22 ergibt sich gemäß der ersten Ausführungsform hinsichtlich der Führung der Flusslinien des Magnetfelds ein zu beachtender Übergang, der in der zweiten Ausführungsform berücksichtigt wird.

Die Figur 2B zeigt eine Schnittdarstellung des erfindungsgemäßen Elektromotors 100' in einer zweiten Ausführungsform.

Bei dieser zweiten Ausführungsform werden in einer ersten Ausführungsvariante Verbindungstellen 21'-22' und 22'-23 vorgesehen, indem die Polhülse 21 als SMC-Polhülse 21' und die Polschenkel 22 als SMC-Polschenkel 22' aus dem weichmagnetischen Pulververbundwerkstoff "SMC" hergestellt werden.

Gemäß der Darstellung ist der Stator 20' dann dreiteilig (jeweilige Verbindungsstellen 21'-22' und 22'-23) und umfasst die herkömmliche äußere Statorhülse 23 (ohne Schraffur) aus einem herkömmlichen weichmagnetischen Material, während die SMC-Polhülse 21' (vergleiche Schraffur) und die SMC-Polschenkel 22' (vergleiche Schraffur) drei separate Teilbereiche bilden, die analog zu der beschriebenen Art und Weise formschlüssig und/oder stoffschlüssig miteinander verbunden werden. Je nach Zusammenbau kann dann eine Innenwicklung des Spulenkörpers (von innen beim vorherigen Zusammenbau von 22' und 23), eine Außenwicklung (von außen beim vorherigen Zusammenbau von 21' und 22') oder eine Einzelzahnwicklung der Polschenkel 22' vor dem Zusammenbau erfolgen.

In einer zweiten Ausführungsvariante des Stators 20' ist der Stator 20' zweiteilig (jeweilige Verbindungsstellen 22'-23) und umfasst die herkömmliche äußere Statorhülse 23 (ohne Schraffur) aus einem herkömmlichen weichmagnetischen Material, während die SMC-Polhülse 21' (vergleiche Schraffur) und die SMC-Polschenkel 22' (vergleiche Schraffur) einteilig hergestellt sind, sodass zwei separate Teilbereiche des Stators 20' aus unterschiedlichen Materialien gebildet werden. In diesem Fall kann nur eine Außenwicklung (von außen durch die Einteiligkeit der SMC-Polhülse 21' und den SMC-Polschenkel 22') erfolgen.

In einer dritten Ausführung des Stators 20' ist der Stator 20' mehrteilig und umfasst die äußere Statorhülse 23 und Polschenkel 22' aus einem herkömmlichen weichmagnetischen Material oder SMC auf dem Umfang geteilt zwischen den Polschenkeln 22' während die SMC Polhülse 21' einteilig hergestellt sind, sodass mehrere separate Teilbereiche des Stators 20' aus unterschiedlichen Materialien gebildet werden. In diesem Fall kann eine Einzelzahnwicklung der Polschenkel einschließlich der Statorhülsensegemente 23 erfolgen.

Wesentlich ist vor allem, dass bei diesen Ausführungsvarianten der zweiten Ausführungsform sowohl die Polhülse 21 als auch die SMC-Polhülse 21' und die Polschenkel 22 als SMC-Polschenkel 22' aus dem weichmagnetischen Pulververbundwerkstoff "SMC" hergestellt werden, wodurch die Führung der Flusslinien des Magnetfeldes im Übergangsbereich zwischen SMC-Polhülse 21' und SMC-Polschenkel 22' optimiert werden kann.

Nach alledem bietet sich eine dritte Ausführungsform an, die nachfolgend erläutert wird.

Die Figur 2C zeigt eine Schnittdarstellung des erfindungsgemäßen Elektromotors 100' in einer dritten Ausführungsform. Aus wirtschaftlicher Sicht bietet es sich nun an den Stator 20' aus einem einheitlichen Material "SMC" herzustellen, woraus sich die folgenden Ausführungsvarianten der dritten Ausführungsform ergeben.

Gemäß der Darstellung ist der Stator 20' dann dreiteilig (jeweilige Verbindungsstellen 21'-22' und 22'-23') und umfasst jetzt auch eine äußere Statorhülse 23' (vergleiche Schraffur) aus einem SMC-Material, sodass die SMC-Polhülse 21' (vergleiche Schraffur) und die SMC-Polschenkel 22' (vergleiche Schraffur) drei separate Teilbereiche bilden, die insgesamt aus SMC-Material bestehen und die analog zu der beschriebenen Art und Weise formschlüssig und/oder stoffschlüssig miteinander verbunden werden. Je nach Zusammenbau kann dann eine Innenwicklung des Spulenkörpers (von innen beim vorherigen Zusammenbau von 22' und 23' an den Verbindungstellen 22'-23') oder eine Außenwicklung (von außen beim vorherigen Zusammenbau von 21' und 22' an den Verbindungstellen 21'-22') erfolgen.

Es kann auch vorab festgelegt sein, dass die äußere SMC-Statorhülse 23' und die SMC-Polschenkel 22' (Innenwicklung des Spulenkörpers) ein einteiliges Bauteil bilden, oder SMC-Polhülse 21' und die SMC-Polschenkel 22' (Außenwicklung des Spulenkörpers) bilden ein einteiliges Bauteil. Im ersten Fall werden die Verbindungstellen 21'-22' und im zweiten Fall die Verbindungstellen 22'-23' beim Zusammenbau eines zweiteiligen Stators 20' miteinander verbunden, wobei der Stator 20' insgesamt aus SMC-Material besteht.

### Bezugszeichenliste

- 100: Elektromotor
- 100': erfindungsgemäßer Elektromotor
- S: herkömmlicher Luftspalt
- S': Spalt
- Δr_{s-s'}: herkömmlicher Spaltabstand
- Δrₛ: erfindungsgemäßer Spaltabstand (Δr_{s-s'} > Δrₛ)
- 10: Rotor
- 12: Rotormanschette
- 13: Magneten
- 20: Stator
- 20': erfindungsgemäßer Stator
- 21: zylinderförmiger Trennkörper, Spalttopf, Polhülse
- 21': erfindungsgemäße Polhülse
- 22: Polschenkel
- 22': erfindungsgemäße Polschenkel
- 23: äußere Statorhülse
- 23': erfindungsgemäße äußere Statorhülse
- 24: Wicklung des Spulenkörpers
- 30: Welle
- 21'-22: Verbindungsstelle
- 21'-22': Verbindungsstelle
- Δr₂₁'₋₂₂: Abstand
- Δr₂₁'₋₂₂': Abstand
- 22'-23: Verbindungsstelle
- 22'-23': Verbindungsstelle
- K1: innere Kreislinie
- K2: äußere Kreislinie

## Patentansprüche

1. Elektromotor (100'), insbesondere für den Betrieb einer Pumpe, umfassend einen Rotor (10) und einen Stator (20), wobei der Stator (20) eine sich in axialer Richtung erstreckende innere Polhülse (21') und eine äußere Statorhülse (23) aufweist, zwischen denen Polschenkel (22) in radialer Richtung angeordnet sind, auf denen eine Wicklung (24) ausgeführt ist, wobei
• zwischen der äußeren Mantelfläche der inneren Polhülse (21') und der inneren Mantelfläche der inneren Polhülse (21') ein definierter Spalt (S') ausgebildet ist, in dem die innere Polhülse (21') angeordnet ist, und
• zwischen der inneren Mantelfläche der inneren Polhülse (21) und der äußeren Mantelfläche des Rotors (10) ein unvermeidbarer Luftspalt (S) ausgebildet ist, sodass zwischen der äußeren Mantelfläche der inneren Polhülse (21') und der äußeren Mantelfläche des Rotors (10) ein Übergangsbereich mit einem radialen Spaltabstand (Δr_{S-S'}), der sich aus dem Spalt (S'), in dem die innere Polhülse (21') angeordnet ist, und dem unvermeidbaren Luftspalt (S) zusammensetzt, gebildet wird, **dadurch gekennzeichnet, dass** zumindest die innere Polhülse (21') des Stators (20') aus einem weichmagnetischen Pulververbundwerkstoff ausgebildet ist, wodurch ein radialer Spaltabstand (Δr_{S}) des Übergangsbereiches, in dem ein magnetischer Widerstand gebildet wird, der dem magnetischen Fluss zwischen Spulenkörper und Rotor (10) entgegen wirkt, auf den unvermeidbaren Luftspalt (S) zwischen der inneren Mantelfläche der inneren Polhülse (21') und der äußeren Mantelfläche des Rotors (10) reduziert.

2. Elektromotor (100') nach Anspruch 1, **dadurch gekennzeichnet, dass** die innere Polhülse (21') aus dem weichmagnetischen Verbundwerkstoff ausgebildet ist, während der Polschenkel (22) und die äußere Statorhülse (23) aus einem Stahlwerkstoff ausgebildet sind.

3. Elektromotor (100') nach Anspruch 1, **dadurch gekennzeichnet, dass** die innere Polhülse (21') und die Polschenkel (22') aus dem weichmagnetischen Verbundwerkstoff ausgebildet sind, während die äußere Statorhülse (23) aus dem Stahlwerkstoff ausgebildet ist.

4. Elektromotor (100') nach Anspruch 1, **dadurch gekennzeichnet, dass** die innere Polhülse (21') und die Polschenkel (22') sowie die äußere Statorhülse (23') aus dem weichmagnetischen Verbundwerkstoff ausgebildet sind.

5. Elektromotor (100') nach Anspruch 2, **dadurch gekennzeichnet, dass** der Stator (20') zweistückig ist, wobei die innere Polhülse (21') aus dem weichmagnetischen Verbundwerkstoff ausgebildet ist, während der Polschenkel (22) und die äußere Statorhülse (23) einstückig aus einem Stahlwerkstoff ausgebildet sind, oder der Stator (20') mehrstückig ist, wobei die innere Polhülse (21') aus dem weichmagnetischen Verbundwerkstoff ausgebildet ist, während der Polschenkel (22) und die äußere Statorhülse (23) zweistückig aus einem Stahlwerkstoff ausgebildet sind.

6. Elektromotor (100') nach Anspruch 3, **dadurch gekennzeichnet, dass** der Stator (20') zweistückig ist, wobei die innere Polhülse (21') und die Polschenkel (22') einstückig aus dem weichmagnetischen Verbundwerkstoff ausgebildet sind, während die äußere Statorhülse (23) aus einem Stahlwerkstoff ausgebildet ist, oder der Stator (20') mehrstückig ist, wobei die innere Polhülse (21') und die Polschenkel (22') zweistückig aus dem weichmagnetischen Verbundwerkstoff ausgebildet sind, während die äußere Statorhülse (23) aus einem Stahlwerkstoff ausgebildet ist.

7. Elektromotor (100') nach Anspruch 4, **dadurch gekennzeichnet, dass** der Stator (20') zweistückig ist, wobei die innere Polhülse (21') und die Polschenkel (22') gemeinsam sowie die Statorhülse (23') jeweils einstückig aus dem weichmagnetischen Verbundwerkstoff ausgebildet sind, oder zweistückig ist,
wobei die innere Polhülse (21') sowie die Polschenkel (22') und die äußere Statorhülse (23') gemeinsam jeweils einstückig aus dem eichmagnetischen Verbundwerkstoff ausgebildet sind, oder
der Stator (20') mehrstückig ist, wobei die innere Polhülse (21'), die Polschenkel (22') und äußere Statorhülse (23') jeweils separat aus dem weichmagnetischen ausgebildet sind.

8. Elektromotor (100') nach einem der Ansprüche 5 bis 7, **dadurch gekennzeichnet, dass** die jeweiligen Stücke form- und/oder stoffschlüssig in den jeweiligen Verbindungsstellen (21'-22, 21'-22', 22'-23, 22'-23') miteinander verbunden sind.

9. Elektromotor (100') nach einem der Ansprüche 5 bis 7, **dadurch gekennzeichnet, dass** ein Abstand (Δr_{21'-22}, Δr_{21'-22'}) zwischen den jeweiligen polhülsenseitigen radialen Enden der Polschenkel (22, 22') und der Innenmantelfläche der Polhülse (21') zumindest innerhalb der Verbindungsstellen (21'-22, 21'-22') gering gewählt ist.

10. Elektromotor (100') nach Anspruch 1, **dadurch gekennzeichnet, dass** die innere Polhülse (21') das Dichtelement zwischen Rotor (10) und der Wicklung (24) des Stators (20') ist.

11. Elektromotor (100') nach Anspruch 1, **dadurch gekennzeichnet, dass** der Rotor (10) und der Stator (20') sowie die sich in axialer Richtung erstreckende innere Polhülse (21') und die äußere Statorhülse (23) zylindrisch ausgebildet sind.

12. Elektromotor (100') nach einem der vorhergehenden Ansprüche 1 bis 4, **dadurch gekennzeichnet, dass** der weichmagnetische Pulververbundwerkstoff ein SMC-[engl.: Soft Magnetic Composite] Pulververbundwerkstoff ist, der aus einem hochreinem Eisenpulver mit einer speziellen Oberflächenbeschichtung ausgebildet ist, wobei auf jedem einzelnen Eisenpulverpartikel eine elektrisch isolierende Oberfläche ausgebildet ist.

## Claims

1. Electric motor (100'), in particular for operating a pump, comprising a rotor (10) and a stator (20), wherein the stator (20) has an inner pole sleeve (21'), extending in the axial direction, and an outer stator sleeve (23), pole limbs (22) on which a winding (24) is embodied being disposed therebetween in the radial direction, wherein
- a defined gap (S'), in which the inner pole sleeve (21') is disposed, is configured between the outer shell face of the inner pole sleeve (21') and the inner shell face of the inner pole sleeve (21'), and
- an inevitable air gap (S) is configured between the inner shell face of the inner pole sleeve (21) and the outer shell face of the rotor (10), such that a transition region having a radial gap spacing (Δr_{s-s'}) is formed between the outer shell face of the inner pole sleeve (21') and the outer shell face of the rotor (10), said transition region being composed of the gap (S') in which the inner pole sleeve (21') is disposed and the inevitable air gap (S),
**characterized in that**
at least the inner pole sleeve (21') of the stator (20') is configured from a soft magnetic powder composite material, as a result of which a radial gap spacing (Δrₛ) of the transition region, in which a magnetic resistance is formed that counteracts the magnetic flux between the coil body and the rotor (10), is reduced to the inevitable air gap (S) between the inner shell face of the inner pole sleeve (21') and the outer shell face of the rotor (10) .

2. Electric motor (100') according to Claim 1, **characterized in that** the inner pole sleeve (21') is configured from the soft magnetic composite material, while the pole limb (22) and the outer stator shell (23) are configured from a steel material.

3. Electric motor (100') according to Claim 1, **characterized in that** the inner pole sleeve (21') and the pole limbs (22') are configured from the soft magnetic composite material, while the outer stator sleeve (23) is configured from the steel material.

4. Electric motor (100') according to Claim 1, **characterized in that** the inner pole sleeve (21') and the pole limbs (22') as well as the outer stator sleeve (23') are configured from the soft magnetic composite material.

5. Electric motor (100') according to Claim 2, **characterized in that** the stator (20') is in two parts, wherein the inner pole sleeve (21') is configured from the soft magnetic composite material, while the pole limb (22) and the outer stator sleeve (23) are integrally configured from a steel material, or the stator (20') is in multiple parts, wherein the inner pole sleeve (21') is configured from the soft magnetic composite material, while the pole limb (22) and the outer stator sleeve (23) are configured in two parts from a steel material.

6. Electric motor (100') according to Claim 3, **characterized in that** the stator (20') is in two parts, wherein the inner pole sleeve (21') and the pole limbs (22') are integrally configured from the soft magnetic composite material, while the outer stator sleeve (23) is configured from a steel material, or the stator (20') is in multiple parts, wherein the inner pole sleeve (21') and the pole limbs (22') are configured in two parts from the soft magnetic composite material, while the outer stator sleeve (23) is configured from a steel material.

7. Electric motor (100') according to Claim 4, **characterized in that** the stator (20') is in two parts, wherein the inner pole sleeve (21') and the pole limbs (22') conjointly as well as the stator sleeve (23') are in each case integrally configured from the soft magnetic composite material, or is in two parts, wherein the inner pole sleeve (21') as well as the pole limbs (22') and the outer stator sleeve (23') conjointly are in each case integrally configured from the soft magnetic composite material, or
the stator (20') is in multiple parts, wherein the inner pole sleeve (21'), the pole limbs (22') and the outer stator sleeve (23') are in each case separately configured from the soft magnetic.

8. Electric motor (100') according to one of Claims 5 to 7, **characterized in that** the respective parts at the respective connection points (21'-22, 21'-22', 22'-23, 22'-23') are connected to one another in a form-fitting and/or materially integral manner.

9. Electric motor (100') according to one of Claims 5 to 7, **characterized in that** a spacing (Δr_{21'-22}, Δr_{21'-22'}) between the respective pole-sleeve proximal radial ends of the pole limbs (22, 22') and the inner shell face of the pole sleeve (21') is chosen to be minor at least within the connection points (21'-22, 21'-22').

10. Electric motor (100') according to Claim 1, **characterized in that** the inner pole sleeve (21') is the sealing element between the rotor (10) and the winding (24) of the stator (20').

11. Electric motor (100') according to Claim 1, **characterized in that** the rotor (10) and the stator (20') as well as the inner pole sleeve (21'), extending in the axial direction, and the outer stator sleeve (23) are configured to be cylindrical.

12. Electric motor (100') according to one of preceding Claims 1 to 4, **characterized in that** the soft magnetic powder composite material is an SMC (soft magnetic composite) powder composite material which is configured from an ultrapure iron powder having a special surface coating, wherein an electrically isolating surface is configured on each individual iron powder particle.

## Revendications

1. Moteur électrique (100'), en particulier pour faire fonctionner une pompe, comprenant un rotor (10) et un stator (20), le stator (20) présentant un manchon de pôle intérieur (21') s'étendant dans la direction axiale et un manchon de stator extérieur (23) entre lesquels des parties saillantes polaires (22) sont disposées dans la direction radiale sur lesquelles un enroulement (24) est réalisé, dans lequel
• entre la surface enveloppante extérieure du manchon de pôle intérieur (21') et la surface enveloppante intérieure du manchon de pôle intérieur (21') est réalisé un intervalle défini (S') dans lequel est disposé le manchon de pôle intérieur (21'), et
• entre la surface enveloppante intérieure du manchon de pôle intérieur (21) et la surface enveloppante extérieure du rotor (10), un entrefer inévitable (S) est réalisé de sorte qu'entre la surface enveloppante extérieure du manchon de pôle intérieur (21') et la surface enveloppante extérieure du rotor (10) se forme une zone de transition avec une distance d'intervalle radiale (Δr_{s-s'},) qui est composée de l'intervalle (S') dans lequel est disposé le manchon de pôle intérieur (21') et de l'entrefer inévitable (S),
**caractérisé en ce qu'**au moins le manchon de pôle intérieur (21') du stator (20') est réalisé dans un matériau composite pulvérulent, magnétique doux, de sorte qu'une distance d'intervalle radiale (Δrₛ) de la zone de transition dans laquelle se forme une résistance magnétique qui s'oppose au flux magnétique entre le corps de bobine et le rotor (10) est réduite à l'entrefer inévitable (S) entre la surface enveloppante intérieure du manchon de pôle intérieur (21') et la surface enveloppante extérieure du rotor (10).

2. Moteur électrique (100') selon la revendication 1, **caractérisé en ce que** le manchon de pôle intérieur (21') est réalisé dans le matériau composite, magnétique doux, alors que la partie saillante polaire (22) et le manchon de stator extérieur (23) sont réalisés dans un matériau en acier.

3. Moteur électrique (100') selon la revendication 1, **caractérisé en ce que** le manchon de pôle intérieur (21') et les parties saillantes polaires (22') sont réalisés dans le matériau composite, magnétique doux, alors que le manchon de stator extérieur (23) est réalisé dans le matériau en acier.

4. Moteur électrique (100') selon la revendication 1, **caractérisé en ce que** le manchon de pôle intérieur (21') et les parties saillantes polaires (22') ainsi que le manchon de stator extérieur (23') sont réalisés dans le matériau composite, magnétique doux.

5. Moteur électrique (100') selon la revendication 2, **caractérisé en ce que** le stator (20') est composé de deux parties, le manchon de pôle intérieur (21') étant réalisé dans le matériau composite, magnétique doux, alors que la partie saillante polaire (22) et le manchon de stator extérieur (23) sont réalisés en une partie dans un matériau en acier, ou le stator (20') est composé de plusieurs parties, le manchon de pôle intérieur (21') étant réalisé dans le matériau composite, magnétique doux, alors que la partie saillante polaire (22) et le manchon de stator extérieur (23) sont réalisés en deux parties dans un matériau en acier.

6. Moteur électrique (100') selon la revendication 3, **caractérisé en ce que** le stator (20') est composé de deux parties, le manchon de pôle intérieur (21') et les parties saillantes polaires (22') étant réalisés en une partie dans le matériau composite, magnétique doux, alors que le manchon de stator extérieur (23) est réalisé dans un matériau en acier, ou le stator (20') est composé de plusieurs parties, le manchon de pôle intérieur (21') et les parties saillantes polaires (22') étant réalisés en deux parties dans le matériau composite, magnétique doux, alors que le manchon de stator extérieur (23) est réalisé dans un matériau en acier.

7. Moteur électrique (100') selon la revendication 4, **caractérisé en ce que** le stator (20') est composé de deux parties, le manchon de pôle intérieur (21') et les parties saillantes polaires (22') étant réalisés ensemble, et le manchon de stator (23') étant réalisé respectivement en une partie dans le matériau composite, magnétique doux, ou étant composé de deux parties,
le manchon de pôle intérieur (21') ainsi que les parties saillantes polaires (22') et le manchon de stator extérieur (23') étant réalisés ensemble respectivement en une partie dans le matériau composite, magnétique doux, ou
le stator (20') est composé de plusieurs parties, le manchon de pôle intérieur (21), les parties saillantes polaires (22') et le manchon de stator extérieur (23') étant respectivement réalisés séparément dans le matériau magnétique doux.

8. Moteur électrique (100') selon l'une quelconque des revendications 5 à 7, **caractérisé en ce que** les parties respectives sont reliées ensemble par complémentarité de forme et/ou par liaison de matière au niveau des points de jonction respectifs (21'-22, 21'-22', 22'-23, 22'-23').

9. Moteur électrique (100') selon l'une quelconque des revendications 5 à 7, **caractérisé en ce qu'**une distance (Δr_{21'-22}, Δr_{21'-22'}) entre les extrémités radiales côté manchon de pôle respectives des parties saillantes polaires (22, 22') et la surface enveloppante intérieure du manchon de pôle (21') est sélectionnée pour être aussi réduite que possible au moins à l'intérieur des points de jonction (21'-22, 21'-22').

10. Moteur électrique (100') selon la revendication 1, **caractérisé en ce que** le manchon de pôle intérieur (21') est l'élément d'étanchéité entre le rotor (10) et l'enroulement (24) du stator (20').

11. Moteur électrique (100') selon la revendication 1, **caractérisé en ce que** le rotor (10) et le stator (20') ainsi que le manchon de pôle intérieur (21') s'étendant dans la direction axiale et le manchon de stator extérieur (23) sont réalisés de manière cylindrique.

12. Moteur électrique (100') selon l'une quelconque des revendications précédentes 1 à 4, **caractérisé en ce que** le matériau composite pulvérulent, magnétique doux, est un matériau composite pulvérulent SMC (en anglais « soft magnetic composite ») qui est réalisé dans une poudre de fer de grande pureté avec un revêtement de surface spécial, une surface électriquement isolante étant réalisée sur chaque particule de poudre de fer individuelle.
